Europäisches Patentamt

European Patent Office

Office européen des brevets

(11) Publication number: **0 281 354 B1**

# EUROPEAN PATENT SPECIFICATION

(45) Date of publication of patent specification: **11.05.94**    (51) Int. Cl.⁵: **C09D 5/02**, C08J 7/04

(21) Application number: **88301757.6**

(22) Date of filing: **01.03.88**

(54) **Coated article.**

(30) Priority: **02.03.87 US 20798**
       **03.03.87 GB 8704941**
       **02.09.87 GB 8720645**

(43) Date of publication of application:
**07.09.88 Bulletin 88/36**

(45) Publication of the grant of the patent:
**11.05.94 Bulletin 94/19**

(84) Designated Contracting States:
**AT BE CH DE ES FR GB IT LI NL SE**

(56) References cited:
**EP-B- 0 157 478**
**AT-B- 345 408**
**GB-A- 1 111 223**

(73) Proprietor: **RAYCHEM LIMITED**
**Rolls House**
**7, Rolls Buildings**
**Fetter Lane**
**London, EC4 1NL(GB)**

(72) Inventor: **Park, George Barry**
**38, Restrop View**
**Purton Nr.Swindon Wiltshire(GB)**
Inventor: **Gansbuehler, George Michael John**
**1 Austen Crescent**
**Liden Swindon Wiltshire(GB)**
Inventor: **Senior, John Malcolm**
**8, The Elms**
**Shah Swindon Wiltshire(GB)**

(74) Representative: **Jay, Anthony William et al**
**Raychem Limited**
**Intellectual Property**
**Law Department**
**Faraday Road**
**Dorcan Swindon Wiltshire (GB)**

## Description

This invention relates to coated articles, and in particular to articles that are provided with a coating of a particulate and/or filamentary material.

Examples of articles that are provided with curable coatings are described in British patent application No. 2,104,800A and in European patent application No. 157,478, the disclosures of which are incorporated herein by reference. Because of the friable nature of such particulate coatings it is necessary to incorporate a binder in the coating, and in the above European application water soluble polyalkylene oxides are proposed as the binder so that the coating may be applied to the article as a dispersion in an aqueous solution of the binder.

However, although the use of polyalkylene oxide binders is satisfactory in certain instances, it has limitations that prevent more widespread use. For example, it is difficult to increase the flexibility of such coatings either before curing in order to reduce their friability, or after curing in order to reduce their brittleness. It is often not practical to improve the flexibility of the coating by increasing the binder level in the coating because this can increase the viscosity of the coating dispersion to such an extent that it is not possible to form a satisfactory coating. In addition, for many applications such as in the field of electrical insulation, it is not desirable for a coating to contain large quantities of water-soluble materials.

According to the present invention, there is provided an article having a surface that is provided with a coating of a particulate or filamentary curable material the particles or filaments of which comprise two or more reactive components capable of reacting together to effect curing when the coating is heated to a curing temperature, characterised in that the coating includes an elastomeric binder that has been incorporated in the coating in the form of an aqueous latex.

Since the viscosity of a coating dispersion using a latex binder will usually be considerably lower than that of a dispersion containing a polyalkylene oxide binder, it is possible to increase the quantity of binder in the coating, thereby increasing the flexibility of the coating both before and after curing if it is curable, without altering the coating process employed. Alternatively, or in addition, it is possible, if desired, to increase the reactive solids content of the dispersion so as to increase the thickness of the final coating without unduly increasing the viscosity of the coating dispersion. Furthermore, because the binders that are used to form the latex will not be water-soluble, it is possible to use relatively large proportions of binder in the coating with no adverse effect on the water resistance of the coating with no adverse effect on the water resistance of the coating. An additional advantage of the articles according to the invention is that, removal of the necessity that the binder be water-soluble substantially broadens the range of polymers available as binders, and facilitates the optimisation of other desirable properties of the coating such as adhesion to particular surfaces, ink receptivity and the like.

The particular quantity of binder that is appropriate will depend on a number of factors including the desired degree of flexibility, the choice of binder and the choice of particulate curable material. Preferably, however, the coating contains at least 10 percent, more preferably at least 15 percent, and especially up to 25 percent by weight, based on the total weight of the coating. Usually the coating will contain not more than 80 percent, more usually not more than 70 percent and most usually not more than 60 percent by weight binder.

Preferred binders include EPDM rubbers, styrene-butadiene-styrene rubbers, nitrile rubbers, chloroprene, neoprene, ethylene-vinyl acetate copolymers preferably containing at least 30 weight percent vinyl acetate, or an acrylate or methacrylate elastomer, e.g. an ethylene-vinyl acetate-butyl acrylate terpolymer.

As stated above, the coating is preferably in a particulate and/or filamentary form, for example it may be in the form of a mat of filaments or in the form of a mat that contains particulate material dispersed therein. Preferably, however, the coating is substantially entirely in particulate form.

Non-curing particulate or filamentary materials may be useful as additives, for example to provide coloured markings, to render the coating reflective or absorptive of radiation, or to render the coating electrically conductive. Appropriate particulate or filamentary materials for such purposes may readily be selected by known criteria.

The use of a particulate and/or filamentary coating enables coatings to be formed that are heat-curable but that also have a high degree of latency as explained in the British patent application mentioned above. That is to say, coatings may be formed that will readily cure within a relatively short length of time when heated, but can be kept for months or even years at ambient temperatures with substantially no premature curing. Such a high degree of latency may be achieved by processing the reactive components of the coating into separate particles and mixing the particles together to form the coating. Thus, the components will exist separately from each other until they are heated, whereupon they will fuse together and react.

However, in other cases the reactive components may be melt blended together before comminution.

Apart from the binder, the coating may, if desired, consist solely of the reactive components although it may include one or more inert components. The inert components may be present with the reactive components in the particles, or may be mixed with the particles as a separate phase or both. For example, the coating may comprise a particulate curable resin such as an epoxy resin, preferably one based on bisphenol A or on epoxy novolak resin, as one component and a particulate curing agent having reactive amine groups or a carboxylic acid, phenolic resin isocyanate or polyester curing agent as the other. The curing agent may itself be polymeric. For example it may be a polyamide having free amino groups or a carboxylated polymer such as an acid terpolymer, in which case the particles of the curing agent need not contain any inert component. If the curing agent is not polymeric, for example an organic peroxide or other free radical initiator, it may be desirable for it to be blended with a polymeric material, e.g. a polyester or a reactive or unreactive polyamide before comminution. The curable resin may instead comprise a polyamide having free amine groups, in which case the curing agent preferably comprises a material having free or blocked isocyanate functional groups, e.g. a cresyl blocked isocyanate. Other curing systems that may be mentioned are unsaturated polyesters or polyurethanes that are cured by a blocked isocyanate curing agent, and polyesters that are cured by a polyepoxide.

Polyamides that may be used for forming one of the components are those that are conventionally used as hot-melt adhesives. These polyamides are characterized by the fact that their amide linkages are separated by an average of at least fifteen carbon atoms and have amorphous structures in contrast with the more highly crystalline, fibre forming polyamides such as nylon 6 or nylon 6.6. The polyamides preferably have an amine number of at least 5, the preferable upper limit for the amine number being determined by the fact that as the amine number increases the polyamides become liquid at lower temperatures. Such polyamides have the advantage that they may also be used to improve the flexibility of the cured coating.

Alternatively or in addition the or at least one material having reactive amine groups is one based on a polymer that is the same as or similar to that on which the epoxy resin is based. For example, and preferably, the or at least one material containing reactive amine groups is an adduct of the epoxy resin that is used with a compound containing reactive amine groups, preferably with an aliphatic diamine or triamine and especially with ethylene diamine or ethylene triamine. The use of an epoxy-amine compound adduct as the other reactive component or one of the other reactive components can significantly improve the cure rate of the adhesive in relation to its storage life, thereby permitting the storage life of the adhesive or the cured properties thereof to be improved.

Chemical curing accelerators may also be present in the coating, either blended with one of the reactive components or as separate particles. Examples of accelerators include dimethylaminopyridine, tris (dimethylaminomethyl) phenol, tin octoate, imidazole or imidazole derivatives such as salts, substituted imidazoles or metal complexes thereof.

In addition to the reactive components the coating may contain other components such as fillers e.g. hydrated metal oxides for example hydrated alumina or magnesia, reinforcing fillers e.g. silica or fillers for other purposes e.g. titanium dioxide; antioxidants, flame retardants, u/v stabilisers, fungicides and the like.

Although the binder will not usually be reactive, it is possible for it to be so, in order for example to improve the high temperature performance of the article, to improve the solvent resistance of the coating or for any other reason. The binder may react with other reactive components of the coating, for example it may comprise a hydroxylated or carboxylated elastomer that will react with an isocyanate or epoxy reactive component. Alternatively, the binder may contain a curing agent. For example a binder that is formed from an unsaturated elastomer e.g. an unsaturated polyester may include a free radical curing agent such as triallyl cyanurate or triallyl isocyanurate.

The coating dispersion may simply be formed by any of the conventional methods described in the Encyclopedia of Chemical Technology Volume 14 by Kirk Othmer published by Wiley Intersciences (1978) page 82, and by incorporating the reactive components into the latex so formed. The coating dispersion may be applied to the surface of an article by any conventional means, e.g. by knife coating, screen printing, roll coating, spray coating or by other methods. After coating the water is driven off to form the finished coating.

The coatings may be applied to a variety of articles. For example they may be applied to heat-shrinkable articles, especially heat-shrinkable moulded articles, as described in the European application mentioned above, for providing a moistureproof seal to an object such as a harness cable, or as coatings on extruded articles either in tubular or sheet form, for example on a heat-shrinkable sheet wraparound article that is used to enclose part of an elongate article whose ends are inaccessible. Alternatively they may be used to form marker assemblies for example as described in our copending British patent application No.

8605306, in which the coating provides a porous layer of latent curable material that is capable of receiving printed indicia and which can be cured to render the indicia substantially indelible. The inclusion of a flexible binder in the marker coating can improve the ability of the marker to be printed on by impact printers e.g. thermal printers, dot-matrix printers, daisy wheel printers or golfball printers, in addition to broadening the range of printer inks that may be used. The disclosure of that British application is incorporated herein by reference.

The following Examples illustrate the invention.

### Example 1

A marker assembly was formed comprising a backing layer formed from a 120 micron thick sheet of polyester sold under the trade name "Mylar", and a surface coating having the composition shown in table I.

## TABLE I

| Component | Parts by Weight |
|---|---|
| bisphenol A epoxy resin | 100 |
| ethylene diamine-bisphenol A epoxy adduct (cure agent) | 61.4 |
| Titanium dioxide | 61.4 |
| ethylene propylene diene monomer (EPDM) | 360 |

The epoxy component and the ethylene-diamine adduct were ground to a particle size of less than 100 um. They were then each fluid energy milled to a mean particle size of 20 um with none greater than 60 um. All components except the EPDM were then mixed and blended into a 50% solids latex of the EPDM to form a dispersion. The dispersion was then coated onto the polyester sheet using a 10.16 cm (4 inch) wide doctor blade knife coater to form a 300-500 um thick layer (wet thickness). After coating the dispersion was allowed to dry at room temperature for 4-12 hours.

The assembly so formed was printed with an IBM ink jet printer. The assembly was then heated to 160°C for 5 minutes using a convection oven in order to cure the coating.

The coating was very flexible both before and after curing. After curing the marker exhibited a matt finish. The assembly was tested for solvent resistance by immersing it in a solvent for one minute and then hand brushing it with ten strokes, this procedure being repeated two times. No deterioration of the assembly or of any print legibility was observed after immersing the marker in distilled water (70°C), "Skydrol" aircraft hydraulic fluid (25°C) or methyl ethyl ketone (25°C).

### Example 2

A marker assembly was formed as described in Example 1 with the exception that the surface coating had the composition given in Table II.

4

## TABLE II

| Component | Parts by Weight |
| --- | --- |
| bisphenol A epoxy resin | 100 |
| ethylene diamine-bisphenol A epoxy adduct (cure agent) | 30 |
| Titanium dioxide (pigment) | 54.5 |
| Antioxidant | 1.3 |
| U V Stabiliser | 5.2 |
| ethylene/vinyl acetate/butyl acrylate terpolymer | 14 |

The coating was flexible and could be printed on using a dot-matrix printer.

**Example 3**

A marker was formed with a surface coating having the composition shown in table III.

## TABLE III

| Component | Parts by Weight |
| --- | --- |
| polybutyl methacrylate | 90 |
| ethoxylated bisphenol A diacrylate | 7 |
| tert. butyl perbenzoate | 3 |
| titanium dioxide | 40 |
| ethylene/vinyl acetate/butyl acrylate terpolymer | 14 |

The ethoxylated bisphenol A diacrylate and the peroxide were absorbed onto the titanium dioxide and the resulting powder was mixed with the polybutyl methacrylate powder. This powder was blended into a latex of the terpolymer to form a coating dispersion. The dispersion was applied to a polyester sheet as described in Example 1 to form an ink-receptive marker.

## Example 4

A marker assembly was formed as described in Example 1 using the following coating composition:-

|  | Parts by Weight |
|---|---|
| carboxylated polyester (Crylcoat E26B UCB) | 149 |
| triglycidylisocyanurate (PT816 Ciba) | 11 |
| titanium dioxide (RTC60) | 20 |
| chlorosulphonated polyethylene latex (Hypalon HYP605 ex Revertex 55% solids) | 16 |

The coating was flexible and could be printed on using ink jet or dot matrix printers.

## Example 5

Example 4 was repeated using the following coating composition.

|  | Parts by Weight |
|---|---|
| carboxylated polyester (Grilester P7207 ex UCB) | 80 |
| bisphenol A epoxy resin (E3003 ex shell) | 80 |
| titanium dioxide (RTC60) | 20 |
| chlorosulphonated polyethylene latex (HYP605) | 16 |

## Example 6

Example 5 was repeated using a carboxylated SBR latex (XZ86829 ex Dow) instead of the HYP605.

6

**Example 7**

Example 4 was repeated using

|  | Parts by Weight |
|---|---|
| hydroxylated polyester (Crilan U502 ex Bayer) | 120 |
| cycloaliphatic diisocyanate (Crilan U1 ex Bayer) | 40 |
| titanium dioxide | 20 |
| styrene/acrylic copolymer latex (SAF54 ex Wacker) | 16 |

**Example 8**

Example 4 was repeated using

|  | Parts by Weight |
|---|---|
| bisphenol A epoxy resin (DER662 ex Dow)* | 152 |
| dicyandiamide (4T2844 ex Ciba)* | 8 |
| with titanium dioxide (RTC60) | 20 |
| chlorosulphonate polyethylene (HYP605) | 16 |

*pre-blended together

In each of Examples 5 to 8, the coating was flexible and could be printed on using an ink jet printer.

For the following Examples, a coating composition was formed by blending the following particulate components (particle size <300 um) in a planetary mixer:

|  | Parts by Weight |
|---|---|
| bisphenol A epoxy | 42.2 |
| polyamide masterbatch | 51.5 |
| ethylene/vinyl acetate/acrylic acid terpolymer | 4.2 |

The polyamide masterbatch had been prepared by melt blending a dimer diamine polyamide hot-melt adhesive with an ethylene diamine-bisphenol A epoxy adduct together with aluminium silicate, an antioxidant and carbon black.

This particulate blend was added at different levels to a series of latices to form a coatable slurry and used to coat heat recoverable articles by dip coating. These coated articles were recovered onto suitable substrates and rolling drum peel tests were conducted. The following examples give details of the latices used, levels of latex in adhesive and peel strengths to various substrates.

The following table lists the latices used.

1. Carboxylated copolymer of styrene and butadiene
    XZ86829 ex Dow.
2. Carboxylated copolymer of styrene and butadiene
    XZ86844 ex Dow.
3. Chlorosulphonated polyethylene
    Hypalon HYP605 ex Revertex.
4. Styrene butadiene copolymer
    DL 460-E ex Wacker.
5. Styrene acrylic acid ester copolymer
    SAF54 ex Wacker.
6. Styrene acrylic copolymer
    Texicryl 13-034 ex Scott Bader.
7. Acrylic
    Hycar 26083 ex BF Goodrich.
8. Acrylic
    Hycar 26120 ex BF Goodrich.
9. Polyvinylidene fluoride
    Kynar 32 ex Pennwalt.
10. Polyvinylidene chloride
    Viclan VL828 ex ICI.
11. Polyethylene
    Quasoft H560 ex Alkaril.
12. Acrylic
    LL875 ex Wacker.

Slurries prepared as above based on various latex based compositions were applied by dip coating to the inner surface of a heat recoverable polyester based tubing. After drying of the coating the tubing was heat recovered onto a similar polyester based substrate. Rolling drum peel strengths were measured at 23°C and at 80°C. Results are shown in the following table.

| Ex | Latex | Parts Latex Solid | Parts Particulate Blend | Peel Strength N/25 nm 23°C | 80°C |
|---|---|---|---|---|---|
| 9 | 1 | 4 | 96 | 80.9 | - |
| 10 | | 10 | 90 | 103.5 | 30.2 |
| 11 | | 30 | 70 | 55.5 | - |
| 12 | | 50 | 50 | 58.8 | - |
| 13 | | 70 | 30 | 51.4 | - |
| 14 | | 90 | 10 | 33.9 | - |
| 15 | 2 | 10 | 90 | 87.7 | 19.4 |
| 16 | | 90 | 10 | 33.2 | - |
| 17 | 3 | 10 | 90 | 120.0 | 21.6 |
| 18 | 4 | 10 | 90 | 63.4 | 4.4 |
| 19 | | 90 | 10 | 14.0 | - |
| 20 | 5 | 10 | 90 | 93.9 | 18.8 |
| 21 | | 50 | 50 | 77.4 | - |
| 22 | 6 | 10 | 90 | 62.2 | - |
| 23 | 7 | 10 | 90 | 63.4 | - |
| 24 | 8 | 10 | 90 | 36.2 | - |
| 25 | 9 | 10 | 90 | 52.8 | |
| 26 | 10 | 10 | 90 | 77.2 | - |
| 27 | | 50 | 50 | 40.9 | - |
| 28 | 11 | 10 | 90 | 59.6 | - |
| 29 | 12 | 10 | 90 | 51.9 | 9.2 |

Slurries were prepared as for Examples 9 to 29 and applied to the inner surface of a heat recoverable polyethylene based tubing. After drying of the coating, the tubing was recovered onto a polyester based substrate. Rolling drum peel strengths were measured at room termperature and at 80°C. Results are shown in the following table.

| Ex | Latex | Parts Latex Solid | Parts Particulate Blend | Peel Strength N/25 mm 23°C | 80°C |
|----|-------|------------|-------------------|-------|-------|
| 30 | 1 | 50 | 50 | 67.4 | – |
| 31 | | 90 | 10 | 60.3 | – |
| 32 | 2 | 90 | 10 | 32.3 | – |
| 33 | 3 | 10 | 90 | 79.0 | 22.3 |
| 34 | 4 | 90 | 10 | 22.5 | – |
| 35 | 6 | 10 | 90 | 92.4 | – |
| 36 | 7 | 10 | 90 | 33.7 | – |
| 37 | 8 | 10 | 90 | 52.1 | – |
| 38 | 9 | 10 | 90 | 74.5 | – |
| 39 | 10 | 10 | 90 | 100.8 | – |
| 40 | 11 | 10 | 90 | 59.7 | – |

Latex 1 described above was used as carrier at a level of 10 parts for the particulate blend (90 parts) Details of peel strengths as measured at 23°C are as follows:

| Ex | Substrates | Peel Strength N/25 nm |
|----|-----------|----------------------|
| 41 | Polyester/polyester | 103.5 |
| 42 | Polyvinylidene fluoride/ polyvinylidene fluoride | 86.6 |
| 43 | Polyethylene/fluoroelastomer (Viton) | 39.3 |
| 44 | Polyethylene + EVA blend/ polyethylene | 49.6 |

Regarding the substrates used in these Examples 41 to 44, the polyester was that sold under the Trade Mark "DR-25"*, the polyvinylidene fluoride was that sold under the Trade Mark "Raychem Kynar"*, the polyethylene of Example 43 was that sold under the Trade Mark "-12"*, the fluoroelastomer was that sold under the Trade Mark "Viton", the blend of Example 44 was that sold under the Trade Mark "-100"*, and polyethylene of Example 44 was that sold under the Trade Mark "RNF100"*.

Composition as described for Examples 4 to 8 have been used in association with heat recoverable polyester-based tubing. After drying of the coating the tubing was heat recovered onto a similar polyester-based substrate. Rolling drum peel strengths were measured at 23°C. Results are as follows:

(* Trade Marks of Raychem Corporation).

10

EP 0 281 354 B1

| Ex | Composition | Peel Strength N/25 nm |
|---|---|---|
| 45 | ex Example 4 | 24.0 |
| 46 | ex Example 5 | 25.0 |
| 47 | ex Example 6 | 8.5 |
| 48 | ex Example 7 | 11.9 |
| 49 | ex Example 8 | 11.0 |

## Claims

1. An article having a surface that is provided with a coating of a particulate or filamentary curable material the particles or filaments of which comprise two or more reactive components capable of reacting together to effect curing when the coating is heated to a curing temperature, characterised in that the coating includes an elastomeric binder that has been incorporated in the coating in the form of an aqueous latex.

2. An article as claimed in claim 1, wherein the coating inclused at least 4 and not more than 90 percent by weight of the elastomeric binder, based on the total weight of the coating.

3. An article according to claim 2, wherein the coating includes at least 5% by weight of the elastomeric binder.

4. An article as claimed in claim 3, wherein the coating includes at least 10, preferably at least 25, percent by weight of the elastomeric binder.

5. An article as claimed In any one of claims 1 to 4, wherein the binder comprises an EPDM rubber, a styrene-butadiene-styrene rubber, a nitrile rubber, natural rubber, chloroprene, neoprene, an ethylene/vinyl acetate copolymer elastomer or an acrylate or methacrylate elastomer.

6. An article according to any preceding claims comprising dimentionally heat-recoverable polymeric material.

7. An article as claimed In any preceding claim wherein the particulate or filamentary material comprises a plurality of reactive components that exist separately from one another in the form of particles and/or filaments.

8. An article as claimed in claim 7, wherein the curable material comprises an epoxy material.

9. An article as claimed in claim 7 or 8, wherein the curable material comprises a polyester.

10. An article as claimed in claim 7 or 8, wherein the curable material comprises a material having free amine groups.

11. An article as claimed in any one of claims 7 to 10, wherein the curable material includes a free-radical curing agent.

12. An article as claimed in any preceding claim, wherein the binder is capable of reacting with one or more other components of the coating.

13. An article as claimed in any preceding claim which is a marker assembly.

11

EP 0 281 354 B1

**Patentansprüche**

**1.** Gegenstand, der eine Oberfläche hat, die mit einer BeSchichtung aus einem teilchenförmigen oder fadenförmigen härtbaren Material versehen ist, dessen Teilchen oder Fäden zwei oder mehr reaktionsfähige Komponenten aufweisen, die fähig sind, miteinander zu reagieren, um ein Härten zu bewirken, wenn die Beschichtung auf eine Härtungstemperatur erwärmt wird,
dadurch gekennzeichnet,
daß die Beschichtung ein elastomeres Bindemittel aufweist, das in die Beschichtung in der Form eines wäßrigen Latex eingebaut worden ist.

**2.** Gegenstand nach Anspruch 1,
wobei die Beschichtung mindestens 4 und nicht mehr als 90 Gew.-% des elastomeren Bindemittels, bezogen auf das Gesamtgewicht der Beschichtung, aufweist.

**3.** Gegenstand nach Anspruch 2,
wobei die Beschichtung mindestens 5 Gew.-% des elastomeren Bindemittels aufweist.

**4.** Gegenstand nach Anspruch 3,
wobei die Beschichtung mindestens 10, bevorzugt mindestens 25 Gew.-% des elastomeren Bindemittels aufweist.

**5.** Gegenstand nach einem der Ansprüche 1 bis 4,
wobei das Bindemittel einen EPDM-Kautschuk, einen Styrol-Butadien-Styrol-Kautschuk, einen Nitrilkautschuk, Naturkautschuk, Chloropren, Neopren, ein Ethylen-Vinylacetat-Copolymer-Elastomer oder ein Acrylat- oder Methacrylat-Elastomer aufweist.

**6.** Gegenstand nach einem der vorhergehenden Ansprüche,
der dimensionsmäßig wärmerückstellbares polymeres Material aufweist.

**7.** Gegenstand nach einem der vorhergehenden Ansprüche,
wobei das teilchenförmige oder fadenförmige Material eine Vielzahl von reaktionsfähigen Komponenten aufweist, die getrennt voneinander in der Form von Teilchen und/oder Fäden existieren.

**8.** Gegenstand nach Anspruch 7,
wobei das härtbare Material ein Epoxidmaterial aufweist.

**9.** Gegenstand nach Anspruch 7 oder 8,
wobei das härtbare Material einen Polyester aufweist.

**10.** Gegenstand nach Anspruch 7 oder 8,
wobei das härtbare Material ein Material aufweist, das freie Amingruppen hat.

**11.** Gegenstand nach einem der Ansprüche 7 bis 10,
wobei das härtbare Material ein radikalisches Härtungsmittel aufweist.

**12.** Gegenstand nach einem der vorhergehenden Ansprüche,
wobei das Bindemittel fähig ist, mit einer oder mehreren anderen Komponenten der Beschichtung zu reagieren.

**13.** Gegenstand nach einem der vorhergehenden Ansprüche,
der eine Markierungsanordnung ist.

**Revendications**

**1.** Article présentant une surface qui est pourvue d'un revêtement en une matière réticulable en particules ou en filaments, dont les particules ou filaments comprennent deux ou plus de deux composants réactifs capables de réagir ensemble pour accomplir une réticulation lorsque le revêtement est chauffé à une température de réticulation, caractérisé en ce que le revêtement contient un liant élastomérique

12

qui y a été incorporé sous forme d'un latex aqueux.

2. Article suivant la revendication 1, dans lequel le revêtement contient au minimum 4 et au maximum 90% en poids du liant élastomérique, sur la base de son poids total.

3. Article suivant la revendication 2, dans lequel le revêtement contient au moins 5% en poids du liant élastomérique.

4. Article suivant la revendication 3, dans lequel le revêtement contient au moins 10 et de préférence au moins 25% en poids du liant élastomérique.

5. Article suivant l'une quelconque des revendications 1 à 4, dans lequel le liant comprend un caoutchouc EPDM, un caoutchouc styrène-butadiène-styrène, un caoutchouc nitrilique, du caoutchouc naturel, du chloroprène, du néoprène, un élastomère formé d'un copolymère éthylène/acétate de vinyle ou un élastomère d'acrylate ou de méthacrylate.

6. Article suivant l'une quelconque des revendications précédentes, comprenant une matière polymérique susceptible de reprise dimensionnelle à chaud.

7. Article suivant l'une quelconque des revendications précédentes, dans lequel la matière en particules ou en filaments comprend une puralité de composants réactifs qui existent séparément les uns des autres sous forme de particules et/ou de filaments.

8. Article suivant la revendication 7, dans lequel la matière réticulable comprend une matière époxy.

9. Article suivant la revendication 7 ou 8, dans lequel la matière réticulable comprend un polyester.

10. Article suivant la revendication 7 ou 8, dans lequel la matière réticulable comprend une matière qui porte des groupes amino libres.

11. Article suivant l'une quelconque des revendications 7 à 10, dans lequel la matière réticulable comprend un agent réticulable par radicaux libres.

12. Article suivant l'une quelconque des revendications précédentes, dans lequel le liant est capable de réagir avec un ou plusieurs autres composants du revêtement.

13. Article suivant l'une quelconque des revendications précédentes, qui est un ensemble à marquer.